# EUROPEAN PATENT APPLICATION

(11) **EP 1 239 314 A1**
(43) Date of publication of application: **11.09.2002**
(21) Application number: 01117098.2
(22) Date of filing: 13.07.2001
(51) Int. Cl.: G02B 6/34

(54) **Optical filter assembly**

(30) Priority: 08.03.2001 WO PCT/EP01/02618; 29.06.2001 EP 01115917
(71) Applicant: Schott Glas, 55122 Mainz (DE)
(72) Inventor: Danielzik, Burkhard, Dr., 55411 Bingen (DE); Kessler, Thomas, Dr., 55218 Ingelheim (DE); Nolte, Uwe, 55435 Gau-Algesheim (DE); Kobayashi, Noboru, 67346 Speyer (DE)
(74) Representative: Herden, Andreas F.

(57) **Abstract**

The invention concerns an optical filter assembly (1) which is especially useful for optical signal transmission, multiplexing and demultiplexing purposes and discloses an optical filter (2), a reflecting arrangement (3), and holding means (4) for holding said optical filter (2) and said reflecting arrangement (3).

## Description

The invention concerns optical filter assemblies in general and especially an optical filter assembly providing a flattened group delay profile as disclosed in EP 01 115 917.5 entitled "Optical Filter Arrangement".

A plurality of optical filter assemblies, e.g. WDM filters (Wavelenght Division and Multiplexing Filters) and DWDM filters (Dense Wavelenght Division and Multiplexing Filters), are known to a person skilled in the art. In a typical optical filter assembly transmission filters are adopted for generating spectral band pass or edge filters. In general, care was taken to avoid any additional surfaces within a propagation path of optical signals to avoid introduction of interferences stemming from scattered photons and to avoid any additional absorption or deterioration of a phase front of said optical signals.

EP 01 115 917.5 which is completely incorporated herein by reference discloses an optical filter arrangement having a flattened group delay profile which renders this filter arrangement especially useful for optical information transmission, multiplexing and demultiplexing purposes.

It is an object of the present invention to provide useful filter assemblies for an optical filter arrangement and especially for an optical filter arrangement according to EP 01 115 917.5.

Accordingly, the invention teaches an optical filter assembly comprising an optical filter, a reflecting arrangement, and holding means for holding said optical filter and said reflecting arrangement. In contradiction to prior art filters a reflecting arrangement is adopted in the propagation path of the optical signals. However, according to a most preferred embodiment of the invention, this reflecting arrangement is apt to influence group delay characteristics of the optical signals.

In this most preferred embodiment of the invention, said optical filter and said reflecting arrangement is a filter combination having a flattened group dispersion profile.

For an effective coupling of waveguides, preferably optical fiber waveguides, and an essentially loss-free transmission of optical signals, a first and a second collimating arrangement is provided.

In a preferred embodiment said first and said second collimating arrangement provides an essentially confocal propagation path for optical signals transmitted through said optical filter arrangement.

In essentially all of the preferred embodiments said first optical collimating arrangement provides an essentially confocal propagation path for optical signals which are i) entering into and propagating through said first optical collimating arrangement and ii) at least a part of which is reflected from said optical filter and iii) enters into an propagates through said first optical collimating arrangement.

If the invention is realized in an optical communication or information processing system then a first optical waveguide is connected to said first GRIN lens as an optical input port and a second optical waveguide is connected to said first GRIN lens as an optical output port.

In a further most preferred embodiment said second optical waveguide is connected to said first GRIN lens subsequent to a position adjustment with a position adjusting mechanism.

Preferably, said optical signals propagating through said filter assembly are focussed onto a first major surface of said optical filter said first major surface carrying a multi layer optical filter arrangement.

In a still further preferred embodiment, a second reflecting arrangement is adopted for an essentially Z-shaped propagation path wherein filtered output signals are propagating essentially in the same direction as the optical input signals.

In a reduced size assembly, said second reflecting arrangement supports said optical filter and a further size reduction is obtained if said second reflecting arrangement comprises a cut-out whereat said optical filter is mounted.

A still further reduction of the size and dimensions of the optical filter assembly is realized if said first and said second reflecting arrangement are arranged on a first and a second major surface of a transparent optical substrate. In addition also said last-mentioned embodiment is still further reduced in its size if said optical filter is arranged on a major surface of said transparent optical substrate.

According to the invention, at least one of the group consisting of said optical filter, said first and said second reflective arrangement comprises a first major surface being inclined relative to an optical axis and in a preferred embodiment this angle of inclination is in a range of 0 to 8 degrees. In a more preferred embodiment, this angle of inclination is in a range of 2 to 6 degrees whereas in a most preferred embodiment this angle of inclination is in a range of 3 to 5 degrees.

The invention is described in more detail below in view of preferred and most preferred embodiments and reference is made to the accompanying drawings.

### Brief Description of the Drawings

- Fig. 1: shows a schematic plan view of a first embodiment of an optical filter assembly according to the present invention,
- Fig. 2: shows a schematic plan view of a second embodiment of an optical filter assembly according to the present invention having a reduced angle of inclination of a first major surface of the reflective arrangement,
- Fig. 3: shows a schematic plan view of the first embodiment as shown in Fig. 1 with a schematic representation of adjusting directions for optical output waveguides,
- Fig. 4: shows a schematic plan view the second embodiment as shown in Fig. 2 with a schematic representation of adjusting directions for optical output waveguides,
- Fig. 5: shows a schematic plan view of a third embodiment of an optical filter assembly according to the present invention,
- Fig. 6: shows a schematic plan view of the third embodiment as shown in Fig. 5 with a schematic representation of adjusting directions for optical output waveguides,
- Fig. 7: shows a schematic plan view of a fourth embodiment of an optical filter assembly according to the present invention,
- Fig. 8: shows a schematic plan view of the fourth embodiment as shown in Fig. 7 with a schematic representation of adjusting directions for optical output waveguides,
- Fig. 9: shows a schematic plan view of a fifth embodiment of an optical filter assembly according to the present invention,
- Fig. 10: shows a schematic plan view of the fifth embodiment as shown in Fig. 9 with a schematic representation of adjusting directions for optical output waveguides,
- Fig. 11: shows a schematic plan view of a sixth embodiment of an optical filter assembly according to the present invention,
- Fig. 12: shows a schematic plan view of the sixth embodiment as shown in Fig. 11 with a schematic representation of adjusting directions for optical output waveguides,
- Fig. 13: shows a schematic plan view of a seventh embodiment of an optical filter assembly according to the present invention,
- Fig. 14: shows a schematic plan view of the seventh embodiment as shown in Fig. 13 with a schematic representation of adjusting directions for optical output waveguides.

### Detailed Description of preferred and most preferred Embodiments

The invention is described in more detail below and like numerals are designating identical or similar elements. However, for a better understanding elements shown in the drawings are a schematic representation and are drawn to scale, i.e. are not representing true dimensions which true dimensions are known to a person skilled in the art and need not to be described in more detail.

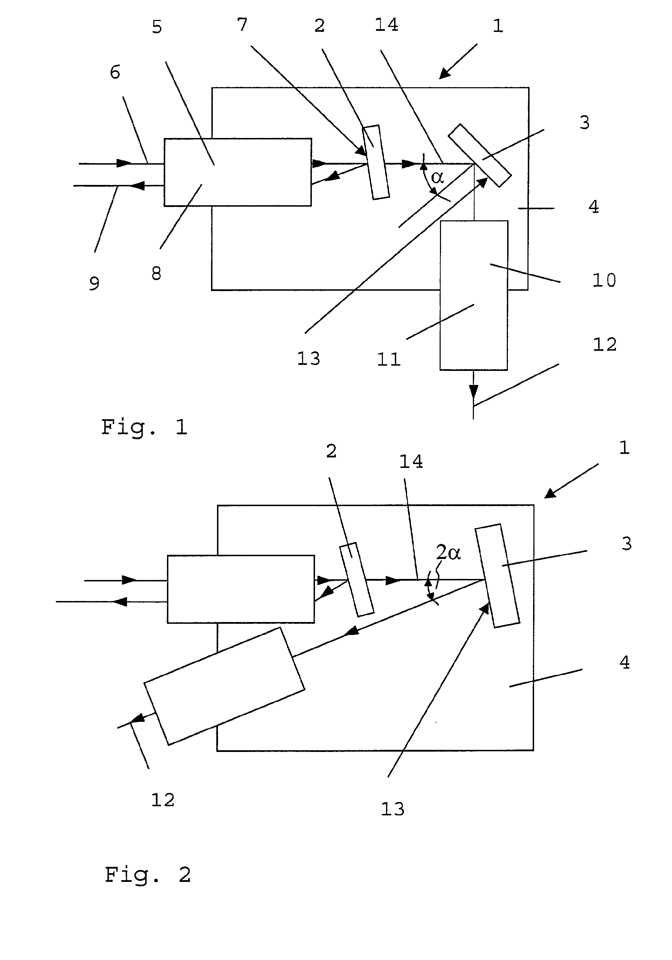

Reference is made to Fig. 1 showing a schematic plan view of a first preferred embodiment of an optical filter assembly 1.

Optical filter arrangement 1 comprises an optical filter 2 a reflecting arrangement 3, and holding means 4 for holding said optical filter 2 and said reflecting arrangement 3.

Holding means 4 are comprising any holding and adjusting elements according to the teaching of PCT/EP01/02618 entitled "Optische Baugruppe mit Justiereinrichtung" of the same applicant which is completely incorporated herein by reference.

According to a most preferred embodiment, reflecting arrangement 4 is a reflective optical filter as described in more detail in in EP 01 115 917.5 "Optical Filter Arrangement". Optical filter 2 and reflecting arrangement 4 is a filter combination having an improved reduced group delay characteristic, especially a flattened group delay profile.

As also can seen from Fig. 1 a first collimating arrangement 5 includes a GRIN lens 8 which directs incoming light from a first optical waveguide 6 onto a first major surface 7 of optical filter 2.

In a most preferred embodiment, optical waveguide 6 is a fiber optical waveguide.

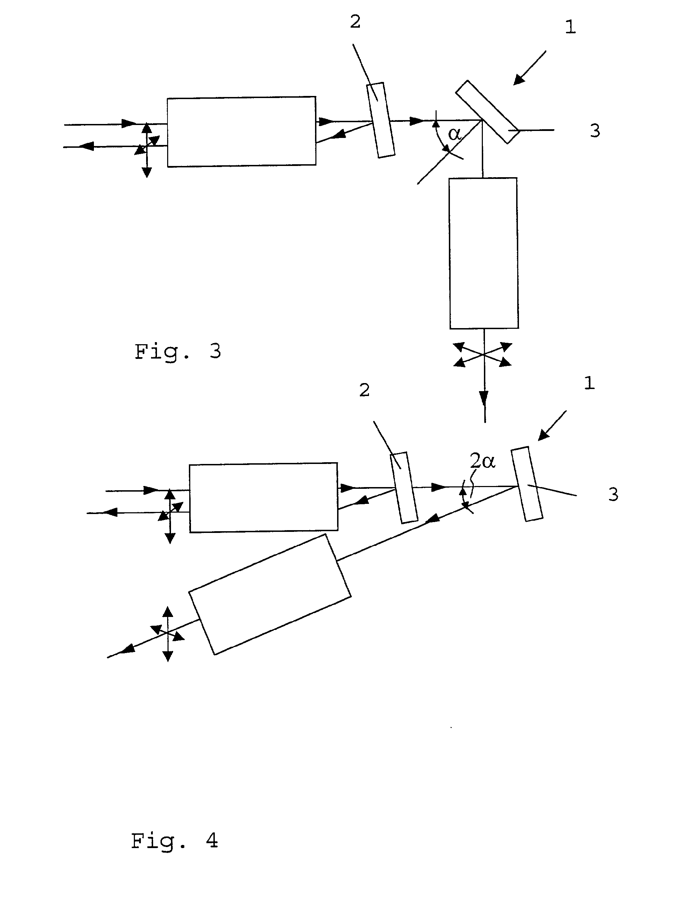

Optical signals propagating through filter assembly 1 are focussed by means of GRIN lens 8 onto first major surface 7 of optical filter 2 and are reflected from first major surface 7 back into said GRIN lens 8 of collimating arrangement 5. To that end major surface 7 is slightly inclined to provide a spatial displacement between incoming and outgoing optical signals on said GRIN lens 8. Outgoing optical signals are directed into a second optical waveguide 9. Said second optical waveguide 9 is connected to said first GRIN lens 8 subsequent to a position adjustment procedure in two essentially perpendicular directions relative to the propagation path of the optical signals with a position adjusting mechanism as described e.g. in PCT/EP01/02618 entitled "Optische Baugruppe mit Justiereinrichtung". Double headed arrows as seen f.i. in Figures 3, 4, 5, 6, 7, 8, 10, 12 and 14 are schematically indicating this process of position adjustment for respective optical fibers.

Optical filter 2 carries a multi layer optical filter arrangement on first major surface 7 having a band pass characteristic. Consequently, filtered light is transmitted within said spectral pass band from optical filter 2 to reflecting arrangement 3 wherefrom this light is redirected into a second collimating arrangement 10 comprising a GRIN lens 11.

Reflecting arrangement 3 is a multi layer coated optical substrate with a first major surface 13 inclined at an angle α relative to an optical axis 14 defined by the propagation path of optical signals propagating through filter assembly 1.

Said reflected and redirected light is transmitted through GRIN lens 11 into an optical waveguide 12 which is in a most preferred embodiment of the invention a fiber optical waveguide.

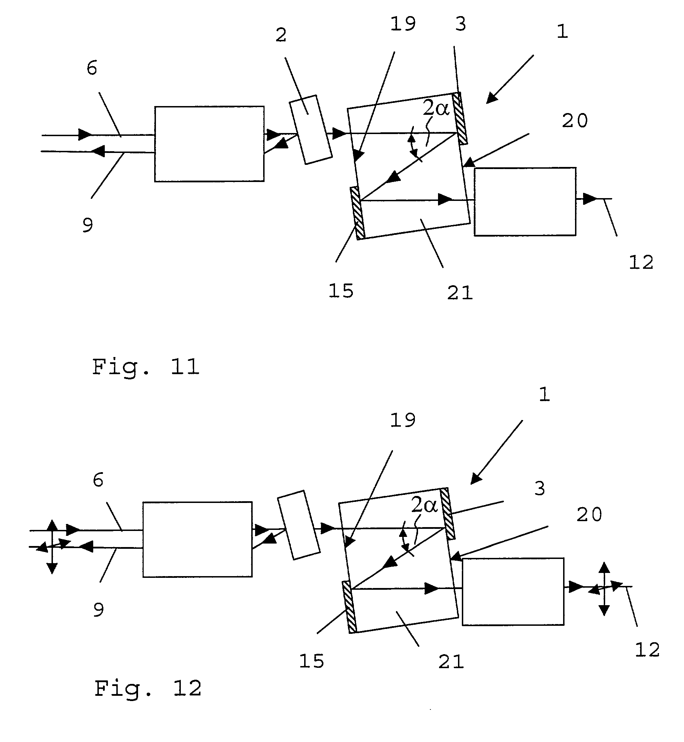

At least one of the group consisting of said optical filter, said first and said second reflective arrangement comprises a first major surface being inclined relative to an optical axis. However, the invention is not restricted to first surface reflecting or filtering elements and any multi layer structure, reflective coating or optical layer may be arranged on a second or third surface of an optical element, as shown exemplarily in Figures 11, 12, 13 and 14.

Said third optical waveguide 12 is connected to said second GRIN lens 11 subsequent to a position adjustment procedure with a position adjusting mechanism as described before for second waveguide 9.

Optical signals which are reflected from optical filter 2 are comprising remaining, not transmitted spectral components which then are fed by means of optical waveguide 9 to further processing or transmitting stages of an optical information processing or transmitting system which is well known to a person skilled in the art and not shown in the drawings.

First and second collimating arrangements 5, 8; 10, 11 provide an essentially confocal propagation path for optical signals transmitted through said optical filter arrangement 2.

The expression "confocal propagation path" according to the invention covers any propagation path of photons or light wherein a reduced geometric diameter of a light wave or phase front thereof which is defined by said photons or said light is realized which reduced diameter subsequently is enlarged again. It is not necessary but not excluded according to the invention that this enlarged diameter is of the same size as an initial diameter of a guided or free space propagating light wave.

Said first optical collimating arrangement 5, 8 provides an essentially confocal propagation path for optical signals which are i) entering into and propagating through said first optical collimating arrangement 5, 8, and ii) at least a part of which is reflected from said optical filter and iii) enters into an propagates through said first optical collimating arrangement 5, 8.

Consequently, said first optical waveguide 6 is connected to said first GRIN lens 8 as an optical input port and said second optical waveguide 9 connected to said first GRIN lens 8 serves as an optical output port. In the same manner third optical waveguide 12 defines an optical output port for filtered light having an improved group delay characteristic.

Reference is made to Fig. 2 showing a schematic plan view of a second embodiment of an optical filter assembly according to the present invention having a reduced angle of inclination of the first major surface 13 of the reflective arrangement 3.

In this second embodiment according to the invention, inclination angle α is reduced if compared with the first embodiment shown in Fig. 1 having an angle of inclination of about 45 degrees and this angle of inclination α is in a preferred version of the second embodiment in a range of 0 to 8 degrees.

In a more preferred embodiment said angle of inclination is in a range of 2 to 6 degrees and in a most preferred embodiment this angle of inclination is in a range of 3 to 5 degrees. These ranges of angles of inclination are also incorporated in further embodiments, as e.g. seen from Figures 4 to 15.

Reference is made to Fig. 3 which shows a schematic plan view of the first embodiment as shown in Fig. 1 with a schematic representation of adjusting directions for optical output waveguides, and to Fig. 4 which shows a schematic plan view the second embodiment as shown in Fig. 2 with a schematic representation of adjusting directions for optical output waveguides.

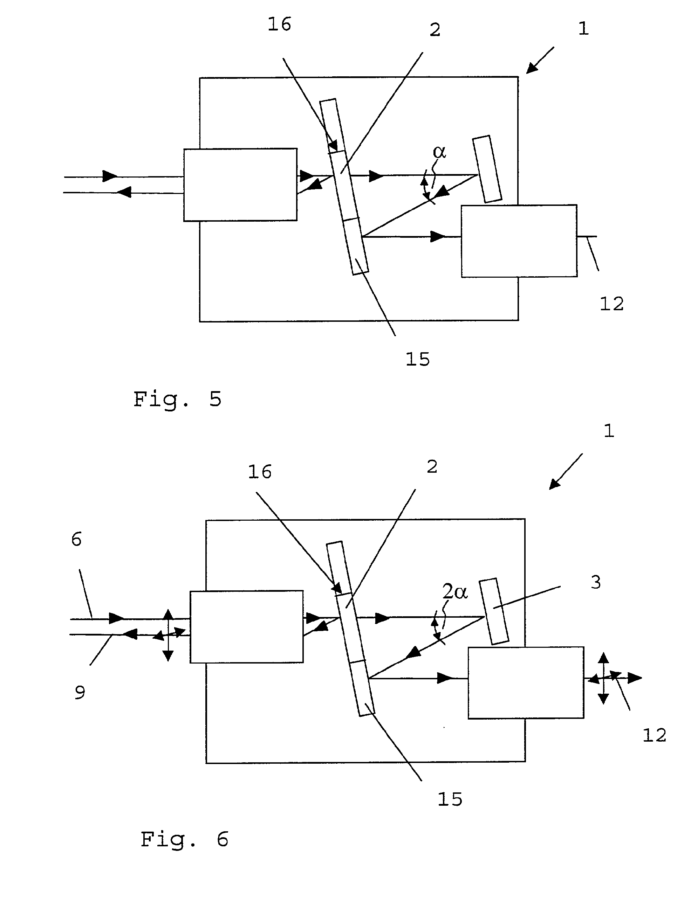

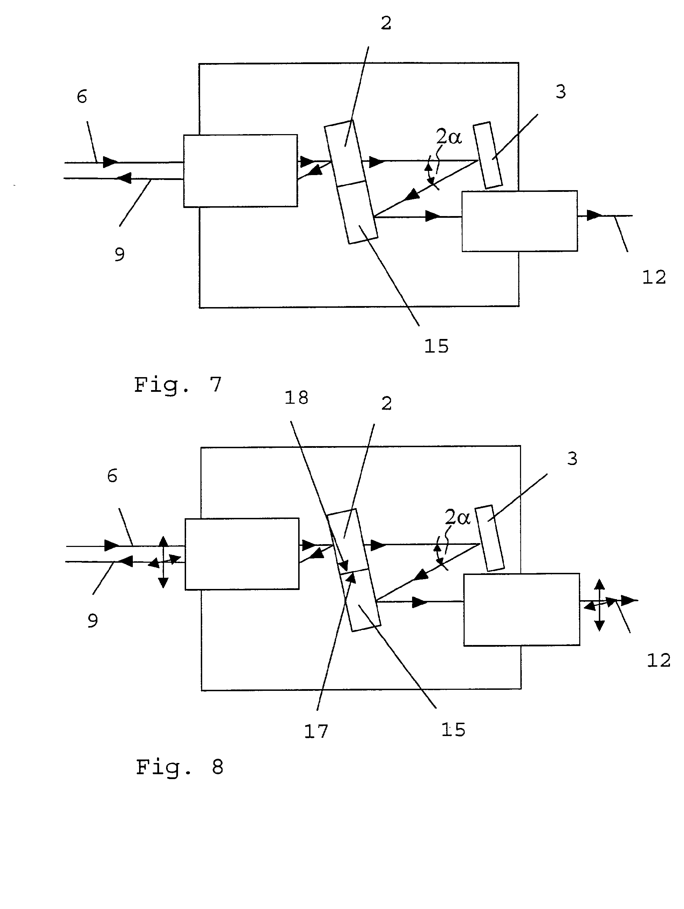

In Fig. 5 a schematic plan view of a third embodiment of an optical filter assembly 1 according to the present invention is depicted and Fig. 6 shows a schematic plan view of the third embodiment as shown in Fig. 5 with a schematic representation of adjusting directions for optical output waveguides 9 and 12.

In this third embodiment, a second reflecting arrangement 15 is adopted to generate an essentially z-shaped path of propagation for optical signals transmitted to output fiber 12.

Reflecting arrangement 14 is a first surface reflecting mirror supporting or holding optical filter 2 within a cut-out or bore 16.

Reference is made to Fig. 7 which shows a schematic plan view of a fourth embodiment of an optical filter assembly 1 according to the present invention and to Fig. 8 which shows a schematic plan view of the fourth embodiment shown in Fig. 7 with a schematic representation of adjusting directions for optical output waveguides 9 and 12.

In this fourth embodiment, second reflecting arrangement 15 is adopted to generate an essentially z-shaped path of propagation for optical signals transmitted to output fiber 12 as in the third embodiment, however, optical filter 2 and reflecting arrangement 15 are mounted side by side, i.e. a lateral side 17 of optical filter 2 is mounted to a lateral side 18 of second reflecting arrangement.

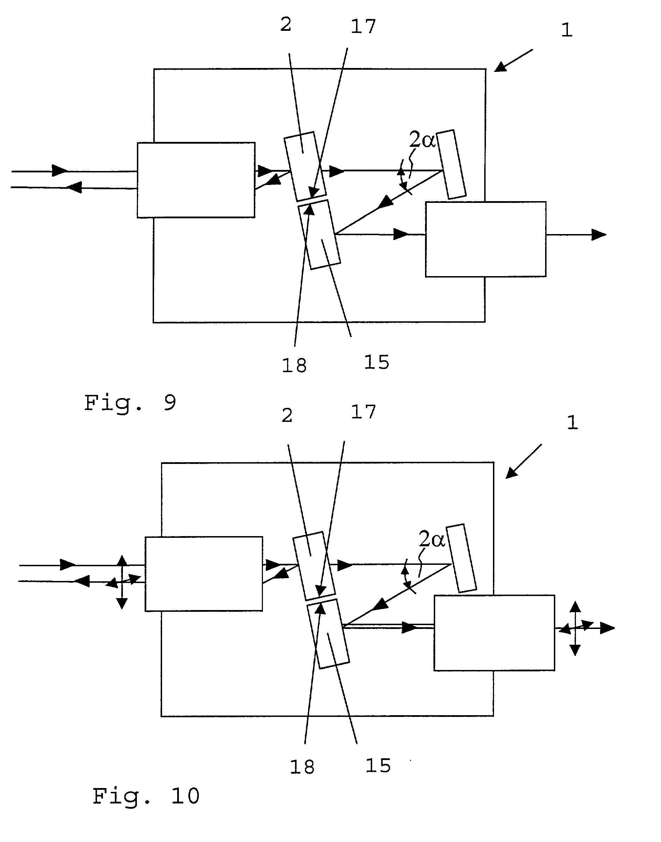

Reference is made to Fig. 9 which shows a schematic plan view of a fifth embodiment of an optical filter assembly 1 according to the present invention, and to Fig. 10 showing a schematic plan view of the fifth embodiment as shown in Fig. 9 with a schematic representation of adjusting directions for optical output waveguides 9 and 12.

In this fifth embodiment, second reflecting arrangement 15 is adopted to generate an essentially z-shaped path of propagation for optical signals transmitted to output fiber 12 as in the third and fourth embodiment, however, optical filter 2 and reflecting arrangement 15 are mounted side by side but are not in direct contact, i.e. a lateral side 17 of optical filter 2 not mounted to lateral side 18 of second reflecting arrangement 15.

Reference is made to Fig. 11 depicting a schematic plan view of a sixth embodiment of an optical filter assembly 1 according to the present invention and to Fig. 12 showing a schematic plan view of the sixth embodiment as shown in Fig. 11 with a schematic representation of adjusting directions for optical output waveguides 9, 12.

In the sixth embodiment, said first and said second reflecting arrangement 3, 15 are arranged on a first and a second major surface 19, 20 of a transparent optical substrate 21. Upper portion of surface 19 and lower portion of surface 20 are not coated with a reflecting structure to allow optical signals to enter and to leave optical substrate 21 but optionally are covered with an anti reflection layer structure.

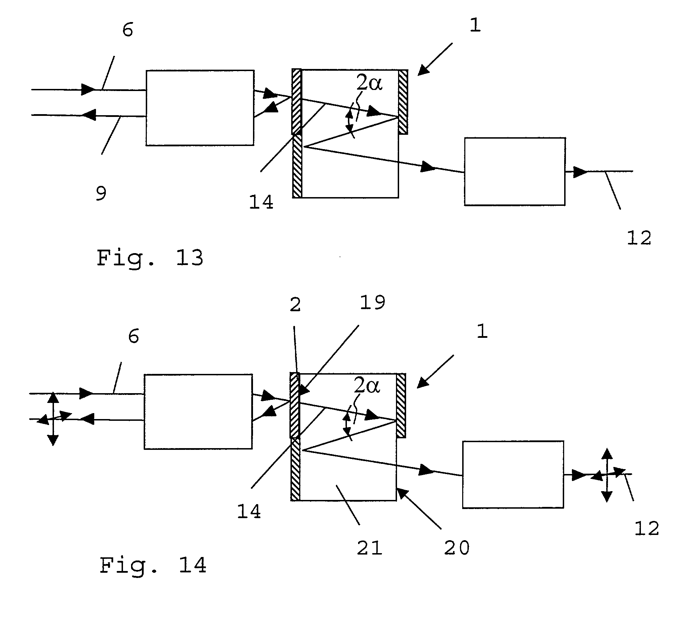

Reference is made to Fig. 13 which shows a schematic plan view of a seventh embodiment of an optical filter assembly according to the present invention and to Fig. 14 depicting a schematic plan view of the seventh embodiment as shown in Fig. 13 with a schematic representation of adjusting directions for optical output waveguides.

In this seventh embodiment which is similar to the sixth embodiment optical filter 2 is arranged on the first major surface of optical substrate 21. In detail, multilayer structure of optical filter 2 is coated on upper part of major surface 19 of optical substrate 21, i.e. said optical filter 2 and said second reflecting arrangement 15 are arranged on the same major surface 19 of optical substrate 21.

In the seventh embodiment, propagation path 15 of optical signals is slightly inclined relative to a propagation path of optical signals within first GRIRN lens 8.

In addition, the invention also covers embodiments which are comprising two reflecting filters, i.e. reflecting arrangements wherein both reflecting arrangements also have a filtering effect for optical signals.

## Claims

1. Optical filter assembly comprising
an optical filter,
a reflecting arrangement, and
holding means for holding said optical filter and said reflecting arrangement.

2. Optical filter assembly according to claim 1 wherein said reflecting arrangement is a reflective optical filter.

3. Optical filter assembly according to claim 2 wherein said optical filter and said reflecting arrangement is a filter combination having a reduced group dispersion.

4. Optical filter arrangement according to claim 1 further comprising a first and a second collimating arrangement.

5. Optical filter assembly according to claim 4 wherein said first and said second collimating arrangement provides an essentially confocal propagation path for optical signals transmitted through said optical filter arrangement.

6. Optical filter assembly according to claim 4 wherein said first optical collimating arrangement provides an essentially confocal propagation path for optical signals
i) entering into and propagating through said first optical collimating arrangement,
ii) at least a part of which is reflected from said optical filter and
iii) enters into an propagates through said first optical collimating arrangement.

7. Optical filter assembly according to claim 1 wherein said first optical collimating arrangement comprises a first GRIN lens.

8. Optical filter assembly according to claim 7 wherein a first optical waveguide is connected to said first GRIN lens as an optical input port.

9. Optical filter assembly according to claim 8 wherein a second optical waveguide is connected to said first GRIN lens as an optical output port.

10. Optical filter assembly according to claim 9 wherein said second optical waveguide is connected to said first GRIN lens subsequent to a position adjustment with a position adjusting mechanism.

11. Optical filter assembly according to claim 4 wherein said second optical collimating arrangement comprises a second GRIN lens.

12. Optical filter assembly according to claim 11 wherein a third optical waveguide is connected to said second GRIN lens.

13. Optical filter assembly according to claim 12 wherein said third optical waveguide is connected to said second GRIN lens subsequent to a position adjustment with a position adjusting mechanism.

14. Optical filter assembly according to claim 1 wherein said optical signals propagating through said filter assembly are focussed onto a first major surface of said optical filter said first major surface carrying a multi layer optical filter arrangement.

15. Optical filter arrangement according to claim 1 further comprising a second reflecting arrangement.

16. Optical filter arrangement according to claim 15 wherein said second reflecting arrangement supports said optical filter.

17. Optical filter arrangement according to claim 16 wherein said second reflecting arrangement comprises a cut-out whereat said optical filter is mounted.

18. Optical filter arrangement according to claim 16 wherein said second reflecting arrangement and said optical filter are mechanically interconnected.

19. Optical filter arrangement according to claim 15 wherein said first and said second reflecting arrangement are arranged on a first and a second major surface of a transparent optical substrate.

20. Optical filter arrangement according to claim 19 wherein said optical filter is arranged on a major surface of said transparent optical substrate.

21. Optical filter arrangement according to claim 20 wherein said optical filter and said second reflecting arrangement are arranged on the same major surface of said optical substrate.

22. Optical filter assembly according to claim 15 wherein at least one of the group consisting of said optical filter, said first and said second reflective arrangement comprises a first major surface being inclined relative to an optical axis.

23. Optical filter arrangement according to claim 22 wherein said angle of inclination is in a range of 0 to 8 degrees.

24. Optical filter arrangement according to claim 22 wherein said angle of inclination is in a range of 2 to 6 degrees.

25. Optical filter arrangement according to claim 22 wherein said angle of inclination is in a range of 3 to 5 degrees.

26. Optical information transmission system comprising an optical filter assembly according to one of claims 1 to 25.

27. Optical information processing system comprising an optical filter assembly according to one of claims 1 to 25.
